# EUROPÄISCHE PATENTSCHRIFT

(11) **EP 2 040 973 B1**
(45) Veröffentlichungstag und Bekanntmachung des Hinweises auf die Patenterteilung: **18.11.2009**
(21) Anmeldenummer: 07786128.4
(22) Anmeldetag: 17.07.2007
(51) Int. Cl.: B63B 7/08, C09J 5/04, C09J 5/06

(54) **VERFAHREN ZUM VERBINDEN ZWEIER GEWEBETEILE UND NAHT ZWEIER GEWEBETEILE**
METHOD FOR CONNECTING TWO FABRIC PIECES, AND SEAM OF TWO FABRIC PIECES
PROCÉDÉ DE RACCORDEMENT DE DEUX PIÈCES DE TISSU ET COUTURE DE DEUX PIÈCES DE TISSU

(30) Priorität: 17.07.2006 DE 102006032963
(43) Veröffentlichungstag der Anmeldung: 01.04.2009
(73) Patentinhaber: Novurania S.p.a., 38079 Tione di Trento (IT)
(72) Erfinder: PELLEGRINI, Mirco, I-38079 Tione de Trento (IT)
(74) Vertreter: Körber, Martin Hans
(86) Internationale Anmeldenummer: PCT/EP2007/006332
(87) Internationale Veröffentlichungsnummer: WO 2008/009420

(56) Entgegenhaltungen:
- DE-A1- 10 038 312

## Beschreibung

Die vorliegende Erfindung betrifft ein Verfahren zum Verbinden zweier Gewebeteile gemäß des Patentanspruchs 1 sowie eine Naht zweier Gewebeteile gemäß des Patentanspruchs 8.

Zur Herstellung mit Luft befüllbarer Schwimmkörper, z. B. RIBs (Rigid Inflatable Boats), Schlauchboote mit starrem Kiel, motorisierbare Schlauchboote oder allgemein größere Schlauchboote unterschiedlicher Art, werden mehrere Gewebeteile zum Schwimmkörper zusammengesetzt. Hierbei ist es besonders wichtig, dass die Gewebeteile an den Nahtstellen fest und dicht miteinander verbunden sind und dass die Naht die gleiche mechanische Festigkeit wie die Gewebeteile aufweist. Als Material für die Schwimmkörper wird Gewebe, welches mit einer Beschichtung versehen ist, verwendet. In Abhängigkeit von den unterschiedlichen möglichen Beschichtungen, welche verwendet werden, werden zur Verbindung der Gewebeteile unterschiedliche Fertigungstechniken verwendet.

Eine erste Möglichkeit ist die Verwendung eines Gewebes, welches mit Polyvinylchlorid (PVC), Polyurethan oder einer anderen thermoplastischen Beschichtung versehen ist. Die Verbindung der Gewebeteile erfolgt hierbei durch Verschweißen, welches mittels Hochfrequenz (HF) oder mittels Hitze und ggf. Druck erfolgt. Eine zweite Möglichkeit ist die Verwendung von Gewebe mit unvulkanisierten Elastomerbeschichtungen, wobei die Gewebeteile dann mittels Vulkanisation der Elastomerbeschichtung voll miteinander verbunden werden. Eine dritte Möglichkeit besteht in der Verwendung von Gewebe mit einer bereits vulkanisierten Elastomerbeschichtung, welche kalt verklebt wird.

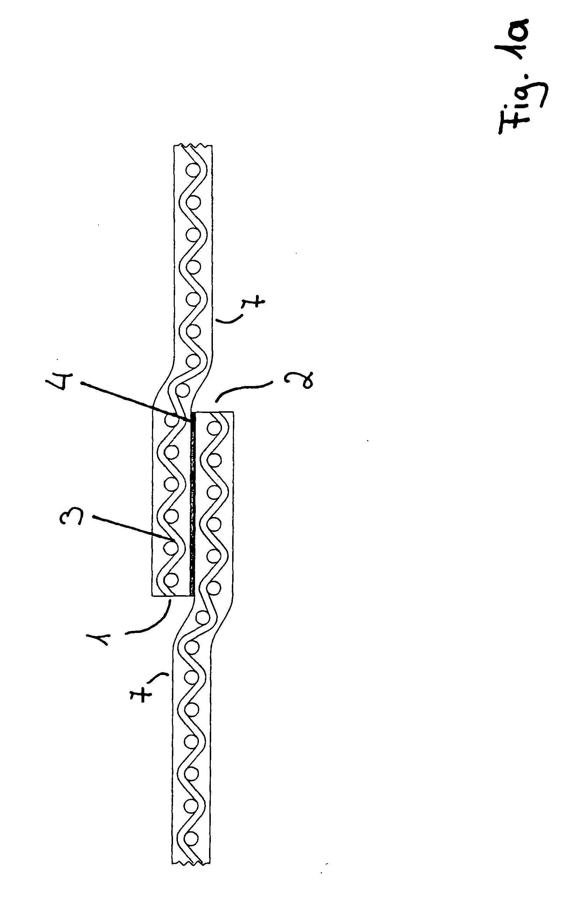

Fig. 1a zeigt eine erste Möglichkeit, wie zwei Gewebeteile mittels den oben genannten Fertigungstechniken und Beschichtungen miteinander verbunden werden können. Ein erstes Gewebeteil 1 ist hierbei mit einem zweiten Gewebeteil 2 überlappend angeordnet. An der Oberfläche 7 der Gewebeteile 1, 2 befindet sich je nach verwendeter Fertigungstechnik eine thermoplastische Beschichtung, eine unvulkanisierte Elastomerbeschichtung oder eine vulkanisierte Elastomerbeschichtung. Durch die oben genannten Verfahren werden an der Überlappungsstelle die beiden Gewebeteile 1, 2 miteinander verbunden. Im Falle der Verwendung eines Gewebes mit einer vulkanisierten Elastomerbeschichtung wird Klebstoff 4 an der Überlappungsstelle der Gewebeteile 1, 2 aufgetragen.

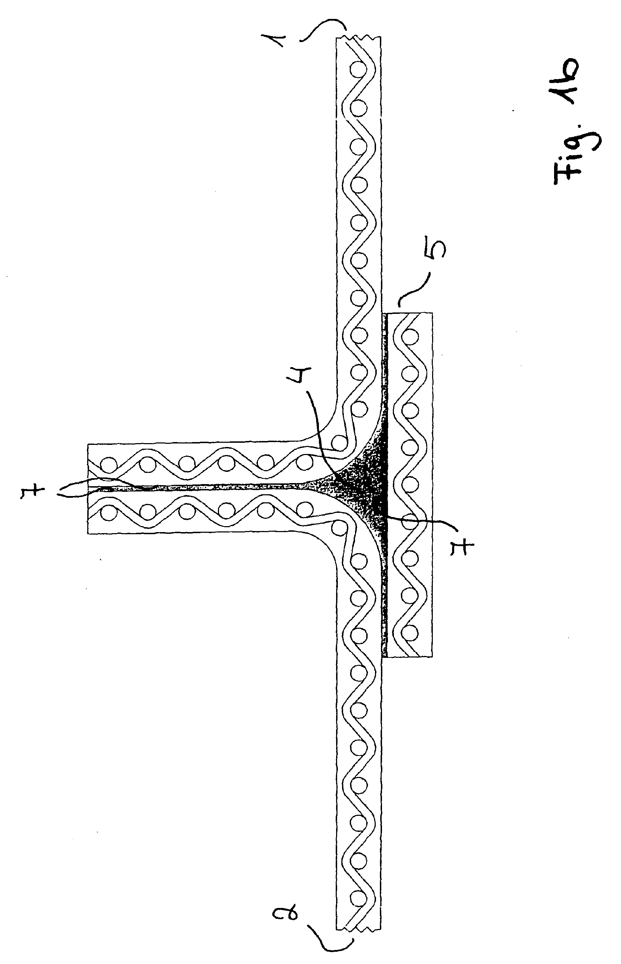

Fig. 1b zeigt eine weitere Möglichkeit der Verbindung zweier Gewebeteile. Hierbei wird ein erstes Gewebeteil 1 und ein zweites Gewebeteil 2 auf einem Teil der Gewebefläche miteinander verbunden, so dass die beiden Gewebeteile eine T-förmige Verbindung darstellen. Auf der Seite, an denen die Gewebeteile 1, 2 auseinanderklaffen, ist ein Nahtband 5 vorgesehen. Das Nahtband 5 dient in diesem Fall in erster Linie zum Verhindern eines Öffnens oder Auseinanderklaffens der Gewebeteile 1, 2. Im Allgemeinen dienen Nahtbänder zum Schutz der Naht und/oder als Kraftübertragungselement. Innennahtbänder dienen insbesondere dafür, dass die Luft nicht in die Fibrillen des Gewebes eindringt und somit praktisch einen Kanal nach außen finden kann. Außennahtbänder dienen insbesondere dazu, dass das Wasser durch Dochtwirkung nicht in die Fibrillen des Gewebes von außen eindringt und somit im Laufe der Zeit die Haftung der Beschichtung am Gewebe nachteilig verändert. Die Oberflächen 7 der Gewebeteile 1, 2 und die Oberfläche 7 des Nahtbandes 5 sind mit einer thermoplastischen, einer vulkanisierten oder einer unvulkanisierten Elastomerbeschichtung versehen, so dass je nach Fertigungstechnik die Gewebeteile 1, 2 und das Nahtband 5 miteinander verbunden werden können. Im Falle der Verwendung eines Gewebes mit einer vulkanisierten Elastomerbeschichtung kann Klebstoff 4 an den Kontaktstellen zwischen den Gewebeteilen 1, 2 und dem Nahtband 5 aufgetragen sein.
Nachteilig bei einer solchen Naht ist, dass sie im Falle eines Schadens nur schwierig repariert werden kann und nicht ästhetisch ist.

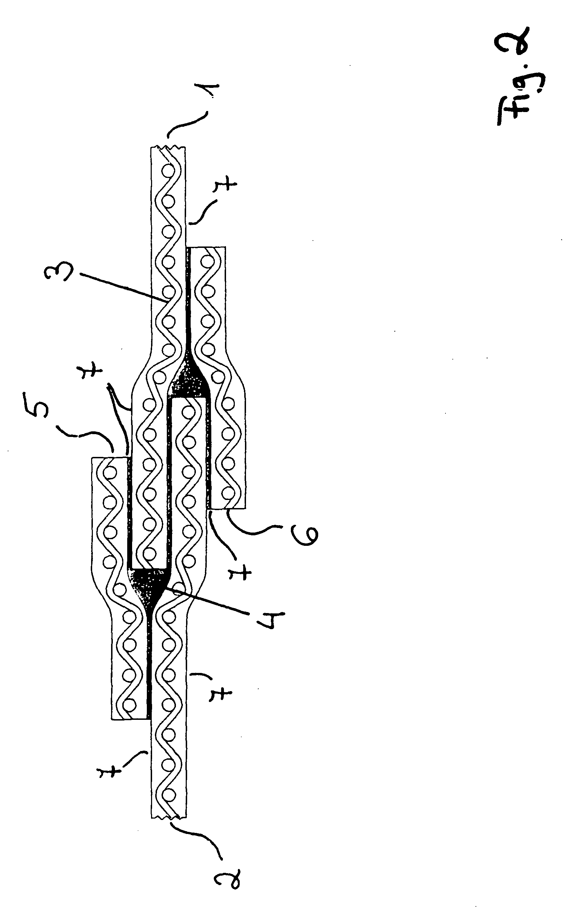

Fig. 2 zeigt eine weitere Möglichkeit der Verbindung zweier Gewebeteile unter Verwendung der oben genannten Methoden. Hierbei ist ein erstes Gewebeteil 1 überlappend mit einem zweiten Gewebeteil 2 angeordnet. Auf beiden Seiten der Überlappungsstellen ist ein Nahtband 5, 6 vorgesehen. Die Verbindung der zwei Gewebeteile 1, 2 sowie der Nahtbänder 5, 6 erfolgt hierbei in Abhängigkeit der verwendeten Beschichtung an den Oberflächen 7. Im Falle der Verwendung eines Gewebes mit einer vulkanisierten Elastomerbeschichtung wird Klebstoff 4 auf die Kontaktstellen zwischen den Gewebeteilen 1, 2 und den Nahtbändern 5, 6 aufgetragen.

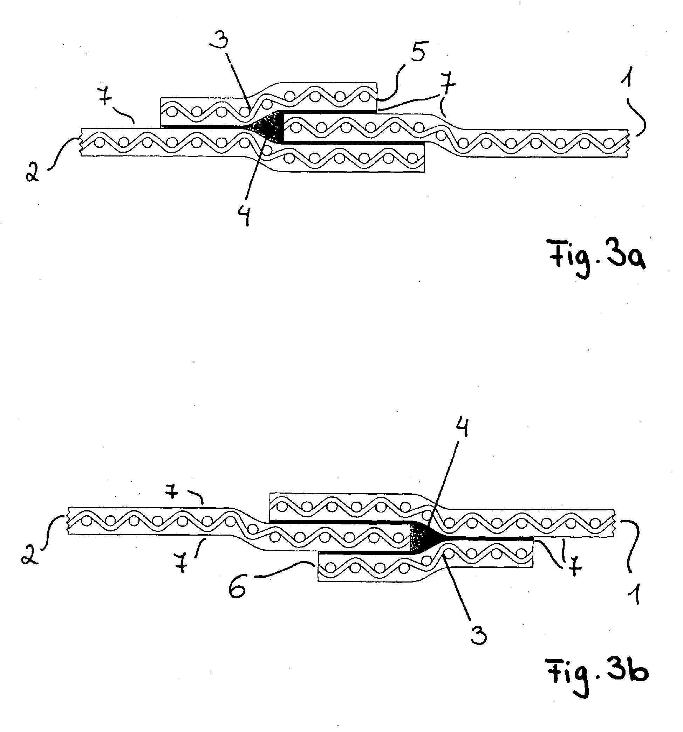

Fig. 3a und 3b zeigen die Verbindung zweier Gewebeteile 1, 2 unter Verwendung jeweils nur eines Nahtbandes 5, 6.

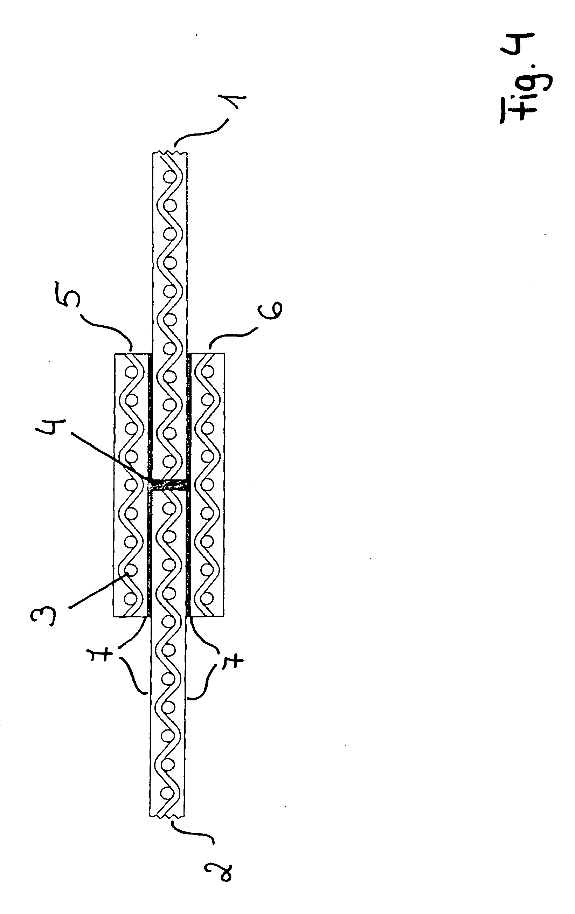

Fig. 4 zeigt die Verbindung zweier Gewebeteile 1, 2 in einer Kopfnaht. Hierbei sind die Gewebeteile 1, 2 so angeordnet, dass sie an ihren Kanten aneinander stoßen. Auf jeder der beiden Seiten der Gewebeteile 1, 2 ist ein Nahtband 5 bzw. 6 vorgesehen. Die Gewebeteile 1, 2 und Nahtbänder 5, 6 sind an ihren Oberflächen 7 mit einer Beschichtung versehen, so dass mittels der oben genannten Verfahren die Gewebeteile 1, 2 mit den Nahtbändern 5, 6 verbunden werden können.

Die beschriebenen Verfahren weisen jedoch verschiedene Nachteile auf. Gewebe, welches mit einer thermoplastischen Beschichtung versehen ist, weist nicht die Alterungseigenschaften und Witterungsbeständigkeit von Gewebe auf, welches eine Elastomerbeschichtung aufweist. Insbesondere Polyvinylchlorid (PVC) wird durch den Verlust der Weichmacher leicht brüchig und spröde. Polyurethan und andere Thermoplaste weisen keine Farbechtheit oder Hydrolysenbeständigkeit auf.

Nachteilig bei Gewebe mit einer unvulkanisierten Elastomerbeschichtung ist ein sehr aufwändiges Herstellungsverfahren. Die Formgebung erfolgt durch Aufbringen des aus unvulkanisiertem elastomerbeschichteten Gewebe auf vorgegebene Formen und anschließender Vulkanisation, wodurch wegen der Verwendung bestimmter vorgegebener Formen keine Abänderung und Personalisierung der Form möglich ist. Ein weiterer Nachteil von Gewebe mit einer unvulkanisierten Elastomerbeschichtung ist, dass das Gewebe sehr empfindlich ist und leicht beschädigt werden kann.

Gewebe mit einer vulkanisierten Elastomerbeschichtung wird durch Kleben miteinander verbunden. Hierfür müssen die zu verklebenden Fläche aufgeraut und mit lösungsmittelhaltigem Kleber bestrichen werden. Diese Fertigung ist sehr zeitaufwändig und unökologisch, da das Lösungsmittel vor der Nahtschließung vollständig verdampfen muss.

Es ist daher die Aufgabe der vorliegenden Erfindung, ein Verfahren zum Verbinden zweier Gewebeteile sowie eine Naht zweier Gewebeteile bereitzustellen, bei dem die Fertigung ökologisch und einfach ist und wodurch eine dauerhafte Verbindung zweier Gewebeteile ohne negative Alterserscheinungen ermöglicht wird.

Die Aufgabe wird erfindungsgemäß durch das im Patentanspruch 1 gekennzeichnete Verfahren sowie durch die in Patentanspruch 8 gekennzeichnete Naht gelöst.

Gemäß der vorliegenden Erfindung wird ein Verfahren zum Verbinden zweier Gewebeteile beansprucht, umfassend die Schritte
a) Aneinanderfügen zweier Gewebeteile an einer Nahtstelle, wobei die Gewebeteile auf einer ersten Seite eine Elastomerbeschichtung und auf einer zweiten Seite eine thermoplastische Beschichtung aufweisen,
b) Abdecken der Nahtstelle auf der ersten Seite der Gewebeteile mittels eines ersten Nahtbandes, wobei das erste Nahtband auf der den Gewebeteilen zugewandten Seite eine Elastomerbeschichtung aufweist und
   Abdecken der Nahtstelle auf der zweiten Seite der Gewebeteile mittels eines zweiten Nahtbandes, wobei das zweite Nahtband auf der den Gewebeteilen zugewandten Seite eine thermoplastische Beschichtung aufweist,
c) Verbinden der Gewebeteile mit dem ersten Nahtband mittels Vulkanisation zumindest einer der Elastomerbeschichtungen und
   Verbinden der Gewebeteile mit dem zweiten Nahtband mittels Behandlung der thermoplastischen Beschichtungen.

Gemäß der vorliegenden Erfindung wird des weiteren eine Naht zweier Gewebeteile beansprucht, umfassend zwei an einer Nahtstelle aneinander gefügte Gewebeteile wobei die Gewebeteile auf einer ersten Seite eine Elastomerbeschichtung und auf einer zweiten Seite eine thermoplastische Beschichtung aufweisen, ein auf der ersten Seite der Gewebeteile die Nahtstelle abdeckendes erstes Nahtband, wobei das erste Nahtband auf der den Gewebeteilen zugewandten Seite eine Elastomerbeschichtung aufweist, ein auf der zweiten Seite der Gewebeteile die Nahtstelle abdeckendes zweites Nahtband, wobei das zweite Nahtband auf der den Gewebeteilen zugewandten Seite eine thermoplastische Beschichtung aufweist, wobei die Gewebeteile mit dem ersten Nahtband mittels Vulkanisation zumindest einer der Elastomerbeschichtungen verbindbar sind und wobei die Gewebeteile mit dem zweiten Nahtband mittels Behandlung der thermoplastischen Beschichtungen verbindbar sind.

Durch die Verwendung zweier Verbindungstechniken zur Verbindung der Gewebeteile wird eine einfache Fertigung ermöglicht sowie eine dauerhafte Verbindung der Gewebeteile ohne Alterserscheinung. Durch die Verbindung der zwei Gewebeteile mit dem ersten Nahtband durch eine Elastomerbeschichtung auf der ersten Seite der Gewebeteile und der den Gewebeteilen zugewandten Seite des ersten Nahtbandes wird eine dauerhafte Verbindung der Gewebeteile ermöglicht, welche keine Alterungseigenschaften und eine hohe Witterungsbeständigkeit aufweist. Auf der anderen Seite wird durch die Verwendung von thermoplastischen Beschichtungen auf der zweiten Seite der Gewebeteile und der den Gewebeteilen zugewandten Seite des zweiten Nahtbandes vermieden, dass die Gewebeteile vor dem Herstellen der Verbindung unerwünschte permanente Falten bilden. Die Verwendung von vulkanisierten Elastomeren führt zu der gewünschten Elastizität und Erreichen der endgültigen Formgebung erst nach der erfolgten Verbindung, so dass zumindest teilweise die Verwendung unvulkanisierter Elastomere ermöglicht wird. Des weiteren wird durch Verwendung der Fertigungstechniken zur Verbindung thermoplastischer Beschichtungen sowie mittels der Vulkanisation ebenfalls eine lösungsmittelfreie und damit ökologische Verbindung ermöglicht.

Vorzugsweise ist die Elastomerbeschichtung auf der ersten Seite der Gewebeteile vulkanisiert.

Des weiteren ist vorzugsweise die Elastomerbeschichtung des ersten Nahtbandes unvulkanisiert.

Vorzugsweise werden die Gewebeteile mit dem ersten Nahtband mittels Vulkanisation der Elastomerbeschichtung des ersten Nahtbandes verbunden. In einer besonders bevorzugten Ausführungsform ist die erste Seite der Gewebeteile und/oder die dem Gewebeteilen zugewandte Seite des ersten Nahtbandes mit chlorsulphoniertem Polyethylen beschichtet.

Die Behandlung der thermoplastischen Beschichtung kann mittels erhitzen erfolgen.

Das Erhitzen der thermoplastischen Beschichtung kann unter Druck erfolgen.

Vorzugsweise ist die thermoplastische Beschichtung der zweiten Seite der Gewebeteile aus Polyvinylchlorid oder Polyurethan.

Vorzugsweise ist die thermoplastische Beschichtung der den Gewebeteilen zugewandten Seite des zweiten Nahtbandes Polyvinylchlorid oder Polyurethan.

In einer bevorzugten Ausführungsform weist die den Gewebeteilen abgewandte Seite des ersten Nahtbandes eine vulkanisierte Elastomerbeschichtung auf.

Die den Gewebeteilen abgewandte Seite des zweiten Nahtbandes kann eine thermoplastische Beschichtung aufweisen.

Vorzugsweise sind die Gewebeteile und die Nahtbänder jeweils textilverstärkt.

In einer bevorzugten Ausführungsform sind die Kanten der Gewebeteile nebeneinander angeordnet.

In einer weiteren Ausführungsform sind die Kanten der Gewebeteile überlappend angeordnet.

Die Erfindung wird im Folgenden anhand von Figuren näher erläutert. Dabei zeigen:
Fig. 1a eine erste Art der Verbindung zweier Gewebeteile gemäß des Standes der Technik,
Fig. 1b eine zweite Art der Verbindung zweier Gewebeteile gemäß des Standes der Technik,
Fig. 2 eine dritte Art der Verbindung zweier Gewebeteile gemäß des Standes der Technik,
Fig. 3a und 3b eine vierte und eine fünfte Art der Verbindung zweier Gewebeteile gemäß des Standes der Technik,
Fig. 4 eine sechste Art der Verbindung zweier Gewebeteile gemäß des Standes der Technik,
Fig. 5 die Verbindung zweier Gewebeteile gemäß der vorliegenden Erfindung und
Fig. 6 einen mit Luft befüllbaren Schwimmkörper mit einer erfindungsgemäßen Naht.

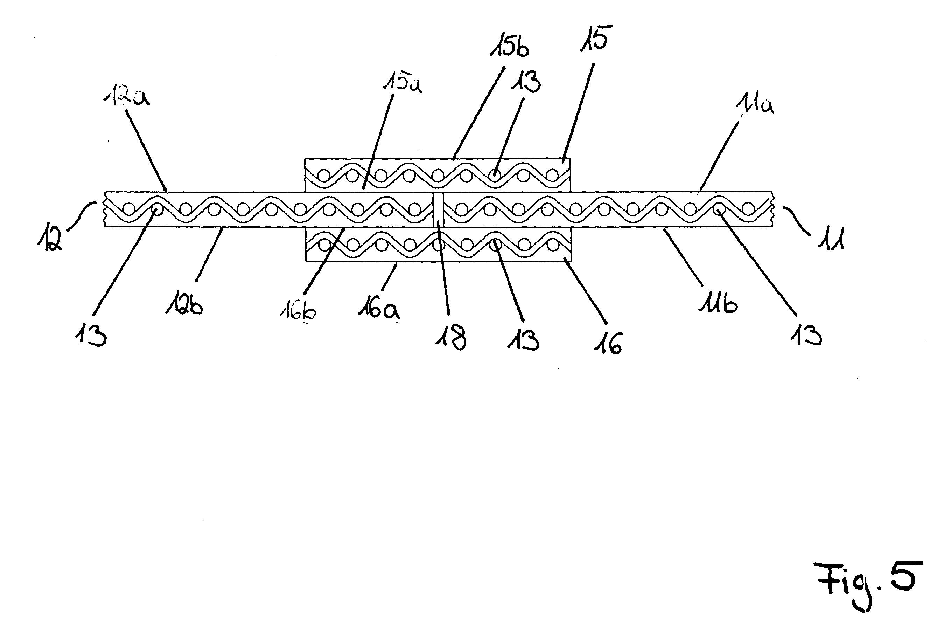

Fig. 5 zeigt die Naht zweier Gewebeteile 11, 12 gemäß der vorliegenden Erfindung, wie sie zum Zusammensetzen einzelner Gewebeteile 11, 12 zur Herstellung eines mit Luft befüllbaren Schwimmkörpers vorgesehen ist. Die beiden Gewebeteile 11, 12 können hierbei so geschnitten sein, dass sie an ihren Kanten aneinander stoßen. Alternativ können die beiden Gewebeteile 11, 12 auch überlappend angeordnet werden, wie gemäß der Figuren 1a, 2, 3a und 3b aus dem Stand der Technik bekannt ist. Vorteilhaft bei jeder dieser Nahtanordnungen ist, dass die Naht im Falle eines Schadens leicht und dauerhaft repariert werden kann. Die erste Seite 11a, 12a der Gewebeteile 11, 12 ist hierbei mit einer Elastomerbeschichtung versehen und weist in Richtung der Außenseite des mit Luft befüllbaren Schwimmkörpers. Die zweite Seite 11b, 12b der Gewebeteile 11, 12 weist eine thermoplastische Beschichtung auf und weist in Richtung des mit Luft befüllbaren oder mit Luft befüllten Innenraums des Schwimmkörpers.

Auf die erste Seite 11a, 12a der Gewebeteile 11, 12 ist ein erstes Nahtband 15 aufgebracht, welches neben der Stabilisation der Naht und der Kraftübertragung 4 auch als Schutz der Naht vor Verschmutzung und Wassereindringen dient. Auf die zweite Seite 11b, 12b der Gewebeteile 11, 12 ist ein zweites Nahtband 16 aufgebracht, welches ebenfalls zur Stabilisation der Naht und zur Kraftübertragung zwischen den Gewebeteilen 11 und 12 dient.

Hierbei ist entweder die Elastomerbeschichtung der ersten Seite 11a, 12a der Gewebeteile 11, 12 oder die Elastomerbeschichtung der den Gewebeteilen 11, 12 zugewandten Seite 15a des ersten Nahtbandes 15 oder beide genannten Elastomerbeschichtungen aus unvulkanisiertem Elastomer. In einer bevorzugten Ausführungsform ist die Elastomerbeschichtung auf der ersten Seite 11a, 12a der Gewebeteile 11, 12 vulkanisiert. Durch die resultierende Elastizität wird eine Faltenbildung vor dem herstellen der Verbindung vermieden und die Formgebung der Naht erfolgt erst nach Verbindung der Gewebeteile 11, 12 mit den Nahtbändern 15, 16. Die Elastomerbeschichtung der ersten Seite 11a, 12a der Gewebeteile 11, 12 und/oder der den Gewebeteilen 11, 12 zugewandten Seite 15a des ersten Nahtbandes 15 besteht hierbei aus chlorsulphoniertem Polyethylen (Hypalon®). Durch die Verwendung von chlorsulphoniertem Polyethylen (Hypalon®) ist eine Farbechtheit und gute Hydrolysenbeständigkeit der Beschichtung gewährleistet. Des weiteren bietet chlorsulphoniertes Polyethylen den Vorteil, dass bei diesem Werkstoff Wasser und Feuchtigkeit als Katalysatoren dienen und die Vulkanisation und damit komplette Vernetzung der Elastomerbeschichtungen auch ohne Hitze im Laufe der Zeit ermöglichen, was insbesondere bei Schwimmkörpern, die ständig mit Wasser und Feuchtigkeit in Berührung kommen, von großem Vorteil ist.

Die den Gewebeteilen 11, 12 zugewandte Seite 16b des zweiten Nahtbandes 16 weist ebenfalls eine thermoplastische Beschichtung auf. Die thermoplastische Beschichtung der zweiten Seite 11b, 12b der Gewebeteile 11, 12 und die den Gewebeteilen 11, 12 zugewandte Seite 16b des zweiten Nahtbandes 16 besteht vorzugsweise aus Polyvinylchlorid (PVC), Polyurethan oder anderen Thermoplasten.

Zur Verbindung der Gewebeteile 11, 12, welche an einer Nahtstelle 18 aneinander stoßen oder im Falle der Überlappung dort überlappen, wird das erste Nahtband 15 auf die Nahtstelle 18 auf der ersten Seite 11a, 12a der Gewebeteile 11, 12 aufgebracht und das zweite Nahtband 16 auf die Nahtstelle 18 auf der zweiten Seite 11b, 12b der Gewebeteile 11, 12. Die Verbindung des ersten Nahtbandes 15 mit der ersten Seite 11a, 12a der Gewebeteile 11, 12 erfolgt durch Vulkanisation der noch nicht vulkanisierten Elastomerbeschichtung. - Für den Fall, dass keine der Beschichtungen auf der ersten Seite 11a, 12a der Gewebeteile oder der den Gewebeteilen 11, 12 zugewandten Seite 15a des Nahtbandes 15 vulkanisiert ist, erfolgt die Vulkanisation aller Elastomerbeschichtungen. Falls nur eine der genannten Beschichtungen unvulkanisiert ist, erfolgt eine Aufvulkanisation der unvulkanisierten Schicht auf die vulkanisierte Schicht.

Das zweite Nahtband 16 wird mit der zweiten Seite 11b, 12b der Gewebeteile 11, 12 mittels geeigneter Behandlung verbunden, z. B. indem die thermoplastischen Beschichtungen mittels Hochfrequenz (HF) oder Hitze und ggf. Druck verschweißt werden.

Die Verwendung einer bereits ausvulkanisierten Elastomerbeschichtung auf der ersten Seite 11a, 12a der Gewebeteile 11, 12 hat den Vorteil, dass das beschichtete Gewebe nicht empfindlich ist und nicht so leicht beschädigt werden kann. Vorzugsweise weist die den Gewebeteilen 11, 12 abgewandte Seite 15b des Nahtbandes 15 die gleiche Elastomerbeschichtung auf wie die erste Seite 11a, 12a der Gewebeteile 11, 12, um einen optisch ansprechenden Eindruck zu erreichen. In einer anderen Ausführungsform weist die den Gewebeteilen 11, 12 abgewandte Seite 15b des ersten Nahtbandes 15 eine andere Beschichtung auf als die erste Seite 11a, 12a der Gewebeteile 11, 12, wobei die Beschichtung der den Gewebeteilen 11, 12 abgewandte Seite 15b des ersten Nahtbandes 15 aber so gewählt ist, dass sie optisch gut zu der Beschichtung der ersten Seite 11a, 12a der Gewebeteile passt. Die den Gewebeteilen abgewandte Seite 16a des Nahtbandes 16 weist eine thermoplastische Beschichtung oder eine andere Art von Beschichtung auf.

Die Gewebeteile und die Naht werden hierbei so zu einem Schwimmkörper zusammengesetzt, dass die erste Seite der Gewebeteile sowie das erste Nahtband 15 an der Außenseite des Schwimmkörpers liegen und die zweite Seite 11b, 12b der Gewebeteile 11, 12 sowie das zweite Nahtband 16 an der Innenseite des Schwimmkörpers liegen und damit zum luftbefüllbaren Raum hinweisen.

Zur mechanischen Stabilisation ist das erste Nahtband 15, das zweite Nahtband 16 oder beide textilverstärkt mit einem Gewebe, welches die gleiche Reiß- und Dehnfestigkeit aufweist wie das Gewebe der Gewebeteile 11, 12. Die Nahtbänder 15, 16 dienen damit als kraftübertragendes Element.

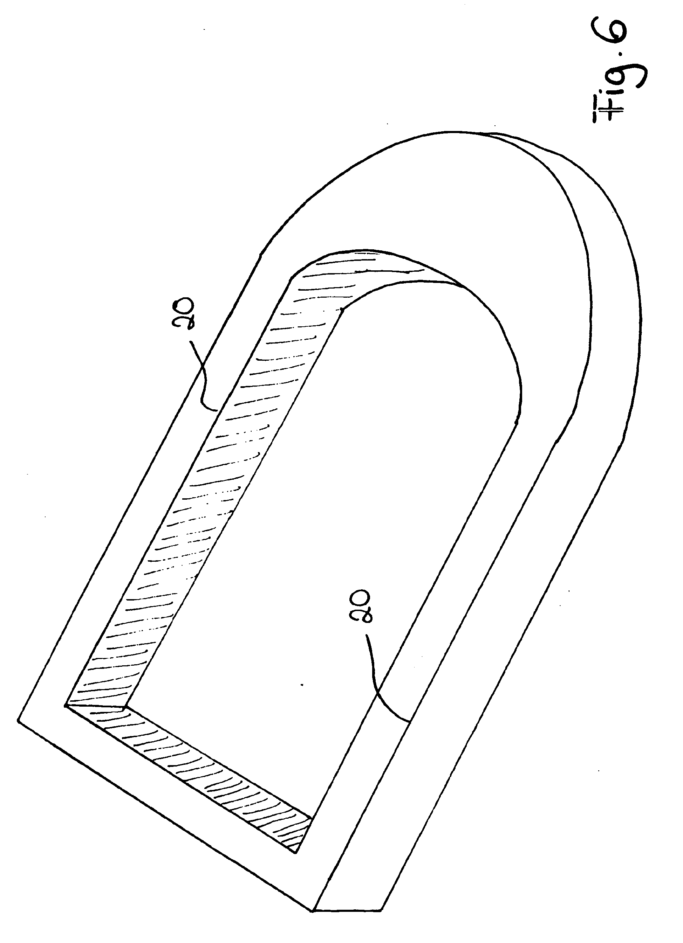

Fig. 6 zeigt einen mit Luft befüllbaren Schwimmkörper 21, z. B. ein RIB (Rigid Inflatable Boat), Schlauchboot mit festem Rumpf, motorisierbares Schlauchboot oder allgemein größeres Schlauchboot unterschiedlicher Art, mit mehreren Nähten 20 gemäß der vorliegenden Erfindung.

Eine Naht gemäß der vorliegenden Erfindung ist nicht auf Schwimmkörper beschränkt, sondern kann bei der Verbindung jeder Art Gewebeteile mit den entsprechenden Beschichtungen verwendet werden.

## Patentansprüche

1. Verfahren zum Verbinden zweier Gewebeteile (11, 12)
umfassend die Schritte
a) Aneinanderfügen zweier Gewebeteile (11, 12) an einer Nahtstelle (18), wobei die Gewebeteile (11, 12) auf einer ersten Seite (11a, 12a) eine Elastomerbeschichtung und auf einer zweiten Seite (11b, 12b) eine thermoplastische Beschichtung aufweisen,
b) Abdecken der Nahtstelle (18) auf der ersten Seite (11a, 12a) der Gewebeteile (11, 12) mittels eines ersten Nahtbandes (15), wobei das erste Nahtband (15) auf der den Gewebeteilen (11, 12) zugewandten Seite (15a) eine Elastomerbeschichtung aufweist und
Abdecken der Nahtstelle (18) auf der zweiten Seite (11b, 12b) der Gewebeteile (11, 12) mittels eines zweiten Nahtbandes (16), wobei das zweite Nahtband (16) auf der den Gewebeteilen (11, 12) zugewandten Seite (16b) eine thermoplastische Beschichtung aufweist,
c) Verbinden der Gewebeteile (11, 12) mit dem ersten Nahtband (15) mittels Vulkanisation zumindest einer der Elastomerbeschichtungen und
Verbinden der Gewebeteile (11, 12) mit dem zweiten Nahtband (16) mittels Behandlung der thermoplastischen Beschichtungen.

2. Verfahren nach Anspruch 1,
wobei die Elastomerbeschichtung auf der ersten Seite (11a, 12a) der Gewebeteile (11, 12) vulkanisiert ist.

3. Verfahren nach Anspruch 1 oder 2,
wobei die Elastomerbeschichtung des ersten Nahtbandes (15) unvulkanisiert ist.

4. Verfahren nach Anspruch 3,
wobei die Elastomerbeschichtung des ersten Nahtbandes (15) aus chlorsulphoniertem Polyethylen besteht.

5. Verfahren nach einem der Ansprüche 1 bis 4,
wobei in Schritt c) die Verbindung der Gewebeteile (11, 12) mit dem ersten Nahtband (15) mittels Vulkanisation der Elastomerbeschichtung des ersten Nahtbandes (15) erfolgt.

6. Verfahren nach einem der Ansprüche 1 bis 5,
wobei in Schritt c) die Behandlung der thermoplastischen Beschichtungen mittels Erhitzen erfolgt.

7. Verfahren nach Anspruch 6,
wobei in Schritt c) das Erhitzen der thermoplastischen Beschichtungen unter Druck erfolgt.

8. Naht zweier Gewebeteile (11, 12) umfassend
zwei an einer Nahtstelle (18) aneinander gefügte Gewebeteile (11, 12), wobei die Gewebeteile (11, 12) auf einer ersten Seite (11a, 12a) eine Elastomerbeschichtung und auf einer zweiten Seite (11b, 12b) eine thermoplastische Beschichtung aufweisen,
ein auf der ersten Seite (11a, 12a) der Gewebeteile (11, 12) die Nahtstelle (18) abdeckendes erstes Nahtband (15), wobei das erste Nahtband (15) auf der den Gewebeteilen (11, 12) zugewandten Seite (15a) eine Elastomerbeschichtung aufweist, ein auf der zweiten Seite (11b, 12b) der Gewebeteile (11, 12) die Nahtstelle (18) abdeckendes zweites Nahtband (16), wobei das zweite Nahtband (16) auf der den Gewebeteilen (11, 12) zugewandten Seite (16b) eine thermoplastische Beschichtung aufweist,
wobei die Gewebeteile (11, 12) mit dem ersten Nahtband (15) mittels Vulkanisation zumindest einer der Elastomerbeschichtungen verbindbar sind und wobei die Gewebeteile (11, 12) mit dem zweiten Nahtband (16) mittels Behandlung der thermoplastischen Beschichtungen verbindbar sind.

9. Naht nach Anspruch 8,
wobei die erste Seite (11a, 12a) der Gewebeteile (11, 12) mit einem ausvulkanisierten Elastomer beschichtet ist.

10. Naht nach Anspruch 8 oder 9,
wobei die den Gewebeteilen (11, 12) zugewandte Seite (15a) des ersten Nahtbandes (15) mit einem unvulkanisierten Elastomer beschichtet ist.

11. Naht nach Anspruch 10,
wobei die Gewebeteile (11, 12) mit dem ersten Nahtband (15) mittels Vulkanisation der Elastomerbeschichtung des ersten Nahtbandes (15) verbindbar sind.

12. Naht nach einem der Ansprüche 8 bis 11,
wobei die erste Seite (11a, 12a) der Gewebeteile (11, 12) und/oder die den Gewebeteilen (11, 12) zugewandte Seite (15a) des ersten Nahtbandes (15) mit chlorsulphoniertem Polyethylen beschichtet ist.

13. Naht nach einem der Ansprüche 8 bis 12,
wobei die Behandlung der thermoplastischen Beschichtungen mittels Erhitzen erfolgen kann.

14. Naht nach Anspruch 13,
wobei das Erhitzen der thermoplastischen Beschichtung unter Druck erfolgen kann.

15. Naht nach einem der Ansprüche 8 bis 14,
wobei die thermoplastische Beschichtung der zweiten Seite (11b, 12b) der Gewebeteile (11, 12) vorzugsweise Polyvinylchlorid oder Polyurethan ist.

16. Naht nach einem der Ansprüche 8 bis 15,
wobei die thermoplastische Beschichtung der den Gewebeteilen (11, 12) zugewandten Seite (16b) des zweiten Nahtbandes (16) vorzugsweise Polyvinylchlorid oder Polyurethan ist.

17. Naht nach einem der Ansprüche 8 bis 16,
wobei die den Gewebeteilen (11, 12) abgewandte Seite (15b) des ersten Nahtbandes (15) eine vulkanisierte Elastomerbeschichtung aufweist.

18. Naht nach einem der Ansprüche 8 bis 17,
wobei die den Gewebeteilen (11, 12) abgewandte Seite (16a) des zweiten Nahtbandes (16) eine thermoplastische Beschichtung aufweist.

19. Naht nach einem der Ansprüche 8 bis 18,
wobei die Nahtbänder (15, 16) jeweils textilverstärkt sind.

20. Naht nach einem der Ansprüche 8 bis 19,
wobei die Kanten der Gewebeteile (11, 12) nebeneinander angeordnet sind.

21. Naht nach einem der Ansprüche 8 bis 19,
wobei die Kanten der Gebeteile (11, 12) überlappend angeordnet sind.

22. Mit Luft befüllbarer Schwimmkörper (21) aufweisend mindestens eine Naht (20) nach einem der Ansprüche 8 bis 21.

## Claims

1. Method for connecting two fabric pieces (11, 12)
comprising the steps
a) joining edge to edge two fabric pieces (11, 12) in a joint (18), whereas the fabric pieces (11, 12) are coated on their first side (11a, 12a) with an elastomer coating, and on their second side (11 b, 12b) with a thermoplastic coating,
b) covering the joint (18) on the first side (11a, 12a) of the fabric pieces (11, 12) with a first seam tape (15), whereas the first seam tape (15) is coated on its side (15a) facing the fabric pieces (11, 12) with an elastomer coating and covering the joint (18) on the second side (11 b, 12b) of the fabric pieces (11, 12) with a second seam tape (16), whereas the second seam tape (16) is coated on its side (16b) facing the fabric pieces (11, 12) with a thermoplastic coating
c) connecting the fabric pieces (11, 12) with the first seam tape (15) through vulcanization of at least one of the elastomer coatings and connecting the fabric pieces (11, 12) with the second seam tape (16) through treatment of the thermoplastic coating.

2. Method according to claim 1,
whereas the elastomer coating on the first side (11a, 12a) of the fabric pieces (11, 12) is fully vulcanized.

3. Method according to claim 1 or 2,
whereas the elastomeric coating of the first seam tape (15) is unvulcanized.

4. Method according to claim 3,
whereas the elastomer coating of the first seam tape (15) is made of chlorosulfonated polyethylene.

5. Method according to one of the claims 1 to 4,
whereas the connection of the fabric pieces (11, 12) with the first seam tape (15) described in step c) is performed through vulcanization of the elastomer coating of the first seam tape (15).

6. Method according to one of the claims 1 to 5,
whereas the connection described in step c) of the thermoplastic coatings is obtained through heating.

7. Method according to claim 6,
whereas the heating described in step c) is carried out under pressure.

8. Seam between two pieces of fabric (11, 12) comprehending
two pieces of fabric (11, 12) joined edge to edge in a joint (18) whereas the fabric pieces (11, 12) are coated on their first side (11a, 12a) with an elastomer coating, and on their second side (11 b, 12b) with a thermoplastic coating,
a first seam tape (15) covering the joint (18) on the first side (11a, 12a) of the fabric pieces (11, 12), whereas the first seam tape (15) is coated on its side (15a) facing the fabric pieces (11, 12) with an elastomer coating,
a second seam tape (16) covering the joint (18) on the second side (11 b, 12b) of the fabric pieces (11, 12), whereas the second seam tape (16) is coated on its side (16b) facing the fabric pieces (11, 12) with a thermoplastic coating
whereas the fabric pieces (11, 12) are connected with the first seam tape (15) through vulcanization of at least one of the elastomer coatings, and whereas the fabric pieces (11, 12) are connected with the second seam tape (16) through treatment of the thermoplastic coatings.

9. Seam according to claim 8,
whereas the first side (11 a, 12a) of the fabric pieces (11, 12) is coated with a fully vulcanized elastomer coating.

10. Seam according to claim 8 or 9,
whereas the side (15a) of the first seam tape (15) facing the fabric pieces (11, 12) is coated with an unvulcanized elastomer coating

11. Seam according to claim 10,
whereas the fabric pieces (11, 12) are connected to the seam tape (15) through vulcanization of the elastomer coating of the first seam tape (15).

12. Seam according to one of the claims 8 to 11,
whereas the first side (11a, 12a) of the fabric pieces (11, 12) and/or the side (15a) of the first seam tape (15) facing the fabric pieces (11, 12) are coated with chlorosulfonated polyethylene

13. Seam according to one of the claims 8 to 12,
whereas the treatment of the thermoplastic coatings can be obtained through heating.

14. Seam according to claim 13,
whereas the heating of the thermoplastic coating is carried out under pressure.

15. Seam according to one of the claims 8 to 14,
whereas the thermoplastic coating of the second side (11 b, 12b) of the fabric pieces (11, 12) is preferably polyvinyl chloride or polyurethane.

16. Seam according to one of the claims 8 to 15,
whereas the thermoplastic coating of the side (16b) of the second seam tape (16) facing the fabric pieces (11, 12) is preferably polyvinyl chloride or polyurethane.

17. Seam according to one of the claims 8 to 16,
whereas the side (15b) of the first seam tape (15) facing in the opposite direction to the fabric pieces (11, 12) is coated with a fully vulcanized elastomer coating.

18. Seam according to one of the claims 8 to 17,
whereas the side (16b) of the second seam tape (16) facing in the opposite direction to the fabric pieces (11, 12) is coated with a thermoplastic coating.

19. Seam according to one of the claims 8 to 18,
whereas the seam tapes (15, 16) are both textile reinforced.

20. Seam according to one of the claims 8 to 19,
whereas the edges of the fabric pieces (11, 12) are joined head to head.

21. Seam according to one of the claims 8 to 19,
whereas the edges of the fabric pieces (11, 12) are overlapped.

22. Floating body (21) that is capable of being filled with air, exhibiting at least one seam (20) made according to one of the claims 8 to 21.

## Revendications

1. Procédé d'assemblage de deux pièces de tissu (11, 12),
comprenant les étapes consistant à
a) abouter deux pièces de tissu (11, 12) au niveau d'une jonction (18), les pièces de tissu (11, 12) présentant sur une première face (11a, 12a) un revêtement en élastomère et sur une deuxième face (11b, 12b) un revêtement thermoplastique,
b) recouvrir la jonction (18) sur la première face (11a, 12a) des pièces de tissu (11, 12) au moyen d'une première bande de jonction (15), la première bande de jonction (15) présentant un revêtement en élastomère sur la face (15 a) tournée vers les pièces de tissu (11, 12), et recouvrir la jonction (18) sur la deuxième face (11b, 12b) des pièces de tissu (11, 12) au moyen d'une deuxième bande de jonction (16), la deuxième bande de jonction (16) présentant un revêtement thermoplastique sur la face (16b) tournée vers les pièces de tissu (11, 12),
c) relier les pièces de tissu (11, 12) à la première bande de jonction (15) par vulcanisation de l'un au moins des revêtements en élastomère, et relier les pièces de tissu (11, 12) à la deuxième bande de jonction (16) par un traitement des revêtements thermoplastiques.

2. Procédé selon la revendication 1,
dans lequel le revêtement en élastomère sur la première face (11a, 12a) des pièces de tissu (11, 12) est vulcanisé.

3. Procédé selon la revendication 1 ou la revendication 2,
dans lequel le revêtement en élastomère de la première bande de jonction (15) est non vulcanisé.

4. Procédé selon la revendication 3,
dans lequel le revêtement en élastomère de la première bande de jonction (15) est en polyéthylène chlorosulfoné.

5. Procédé selon l'une des revendications 1 à 4,
dans lequel, à l'étape c), la liaison des pièces de tissu (11, 12) à la première bande de jonction (15) se fait par vulcanisation du revêtement en élastomère de la première bande de jonction (15).

6. Procédé selon l'une des revendications 1 à 5,
dans lequel, à l'étape c), le traitement des revêtements thermoplastiques se fait par chauffage.

7. Procédé selon la revendication 6,
dans lequel, à l'étape c), le chauffage des revêtements thermoplastiques se fait sous pression.

8. Assemblage de deux pièces de tissu (11, 12), comprenant
deux pièces de tissu (11, 12) aboutées au niveau d'une jonction (18), les pièces de tissu (11, 12) présentant sur une première face (11a, 12a) un revêtement en élastomère et sur une deuxième face (11b, 12b) un revêtement thermoplastique,
une première bande de jonction (15) placée sur la première face (11a, 12a) des pièces de tissu (11, 12) et recouvrant la jonction (18), la première bande de jonction (15) présentant sur la face (15a) tournée vers les pièces de tissu (11, 12) un revêtement en élastomère,
une deuxième bande de jonction (16) placée sur la deuxième face (11b, 12b) des pièces de tissu (11, 12) et recouvrant la jonction (18), la deuxième bande de jonction (16) présentant sur la face (16b) tournée vers les pièces de tissu (11, 12) un revêtement thermoplastique,
dans lequel les pièces de tissu (11, 12) peuvent être reliées à la première bande de jonction (15) par vulcanisation de l'un au moins des revêtements en élastomère et dans lequel les pièces de tissu (11, 12) peuvent être reliées à la deuxième bande de jonction (16) par un traitement des revêtements thermoplastiques.

9. Assemblage selon la revendication 8,
dans lequel la première face (11a, 12a) des pièces de tissu (11, 12) est revêtue d'un élastomère vulcanisé.

10. Assemblage selon la revendication 8 ou la revendication 9,
dans lequel la face (15a) de la première bande de jonction (15) tournée vers les pièces de tissu (11, 12) est revêtue d'un élastomère non vulcanisé.

11. Assemblage selon la revendication 10,
dans lequel les pièces de tissu (11, 12) peuvent être reliées à la première bande de jonction (15) par vulcanisation du revêtement en élastomère de la première bande de jonction (15).

12. Assemblage selon l'une des revendications 8 à 11,
dans lequel la première face (11a, 12a) des pièces de tissu (11, 12) et/ou la face (15a) de la première bande de jonction (15) tournée vers les pièces de tissu (11, 12) est revêtue de polyéthylène chlorosulfoné.

13. Assemblage selon l'une des revendications 8 à 12,
dans lequel le traitement des revêtements thermoplastiques peut se faire par chauffage.

14. Assemblage selon la revendication 13,
dans lequel le chauffage du revêtement thermoplastique peut se faire sous pression.

15. Assemblage selon l'une des revendications 8 à 14,
dans lequel le revêtement thermoplastique de la deuxième face (11 b, 12b) des pièces de tissu (11, 12) est de préférence en polychlorure de vinyle ou en polyuréthane.

16. Assemblage selon l'une des revendications 8 à 15,
dans lequel le revêtement thermoplastique de la face (16b) de la deuxième bande de jonction (16) tournée vers les pièces de tissu (11, 12) est de préférence en polychlorure de vinyle ou en polyuréthane.

17. Assemblage selon l'une des revendications 8 à 16,
dans lequel la face (15b) de la première bande de jonction (15) opposée aux pièces de tissu (11, 12) présente un revêtement en élastomère vulcanisé.

18. Assemblage selon l'une des revendications 8 à 17,
dans lequel la face (16a) de la deuxième bande de jonction (16) opposée aux pièces de tissu (11, 12) présente un revêtement thermoplastique.

19. Assemblage selon l'une des revendications 8 à 18,
dans lequel les bandes de jonction (15, 16) sont renforcées l'une et l'autre par un textile.

20. Assemblage selon l'une des revendications 8 à 19,
dans lequel les bords des pièces de tissu (11, 12) sont disposés bout à bout.

21. Assemblage selon l'une des revendications 8 à 19, dans lequel les bords des pièces de tissu (11, 12) se chevauchent.

22. Corps flottant pouvant être rempli d'air (21), présentant au moins un assemblage (20) selon l'une des revendications 8 à 21.
